# EUROPEAN PATENT SPECIFICATION

(11) **EP 4 202 279 B1**
(45) Date of publication and mention of the grant of the patent: **06.11.2024**
(21) Application number: 21217850.3
(22) Date of filing: 27.12.2021
(51) Int. Cl.: F16L 25/00, F16L 55/165

(54) **DUCT AND RELATED PRODUCTION METHOD**
KANAL UND ZUGEHÖRIGES PRODUKTIONSVERFAHREN
CONDUIT ET PROCÉDÉ DE PRODUCTION ASSOCIÉ

(43) Date of publication of application: 28.06.2023
(73) Proprietor: Nova Siria S.r.l., 10060 Roletto (TO) (IT)
(72) Inventor: CORDA, Stefano, 10060 ROLETTO (TO) (IT); SERAFINI, Roberto, 10060 ROLETTO (TO) (IT)
(74) Representative: Studio Torta S.p.A.

(56) References cited:
- KR-A- 20190 142 885
- US-A- 4 149 740
- US-A1- 2017 001 580
- US-A1- 2019 249 812

## Description

This invention regards a duct and a related production method.

In particular, the duct could be used in a civic water-supply system and be traversed by water or it could be intended to convey a fluid for industrial use.

The known ducts comprise multiple pipes connected together via welded joints, interception elements, or connection joints.

More specifically, the duct has multiple points anchoring it to the ground and the pipes may be fitted inside the interception elements and connection joints.

The flow of fluid inside the duct and the pressure inside the duct itself determine an axial force on the components/joints downstream and upstream of the pipe and on the pipe itself with reference to a forward direction of the fluid. This axial thrust is generated, for example, where there are curved sections of the duct or when the interception elements are being closed.

As a result, the pipe tends to slide out of the interception elements or the connection joints.

According to some known solutions, the pipe is axially fixed to the interception elements or to the connection joints using adhesive substances.

In the sector, there is a need to limit, as much as possible, the risk of slipping out by using adhesives as little as possible.

This need is particular felt in the case of repairs to already existing ducts having a broken area, according to a technology known as Cured-In-Place-Pipe (CIPP) .

According to this technology, a tubular element (also known as a liner) made of polyester felt or glass fibre is preliminarily imbued with a thermosetting resin (called a carrier) - polyester, vinyl ester, or epoxy resin - suitable for resisting the chemical action of fluids conveyed in the duct, and, following this, inserted inside the pipe to be repaired, which assumes the function of host pipe.

The sheath is then inflated inside the host pipe, so as to bear it perfectly in contact with the walls of the pipe itself.

Once inserted and inflated, the tubular element imbued with resin is made to harden through the curing/polymerization of the resin with which it is imbued, until it adheres to the host pipe to be repaired.

In particular, polymerization of the resin may occur thanks to the administration of heat using hot water or superheated steam or radiant energy via ultraviolet ray emitters.

When the consolidation is finished, the hardened sheath is cut at intermediate and end inspection wells.

The end contact points between the sheath and host pipe are sealed via the manual application of special chemically binding putties or by using specific seals.

KR-A-2019/0142885 discloses a duct according to the preamble of claim 1 and a method for producing a duct according to the preamble of claim 10. The purpose of this invention is to produce a duct, which meets, easily and economically, at least one of the needs described above.

The above-mentioned purpose is achieved with a duct according to what is claimed in claim 1.

This invention also relates to a method for producing a duct according to what is claimed in claim 10.

To better understand this invention, a preferred embodiment is described below, by way of non-limiting example and with reference to the attached drawings, in which:
- Figure 1 illustrates, in a partial cross-section view, a duct produced according to the precepts of this invention, with parts removed for clarity;
- Figure 2 illustrates - in an exploded perspective view and on a greatly enlarged scale - some components of the duct in Figure 1;
- Figure 3 is a perspective view on an enlarged scale of a conveyor pipe of the duct in Figures 1 and 2;
- Figure 4 is a perspective view on an enlarged scale of a flanged element of the duct in Figures 1 and 2;
- Figures 5 to 8 illustrate respective steps of a method for repairing a duct produced according to the precepts of this invention;

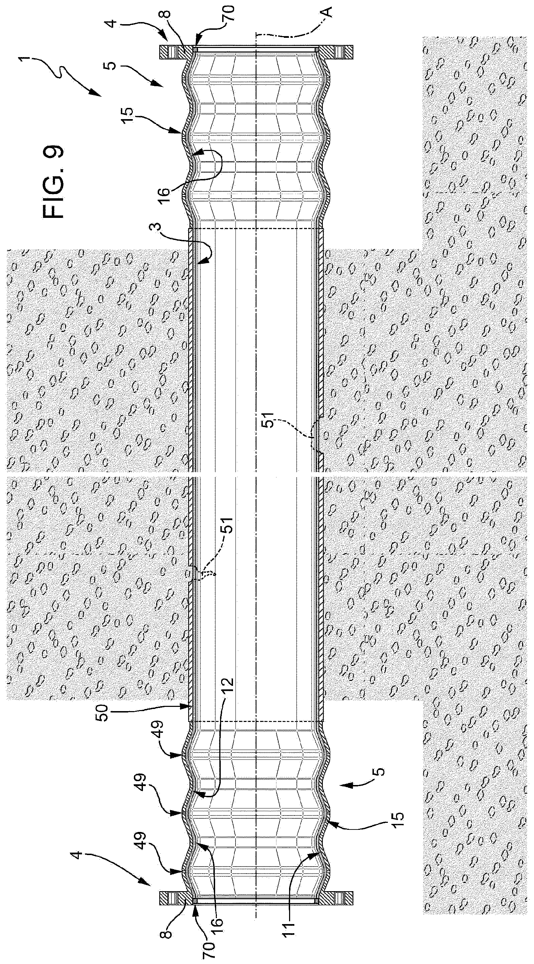

- Figure 9 is a longitudinal cross-section view of the duct in Figure 8; and
- Figures 10 and 11 illustrate, on a greatly enlarged scale, some details of the duct in Figures 8 and 9.

With reference to the figures attached, the reference number 1 indicates a duct for conveying a pressurised fluid.

The pressurised fluid may be for civic or industrial use.

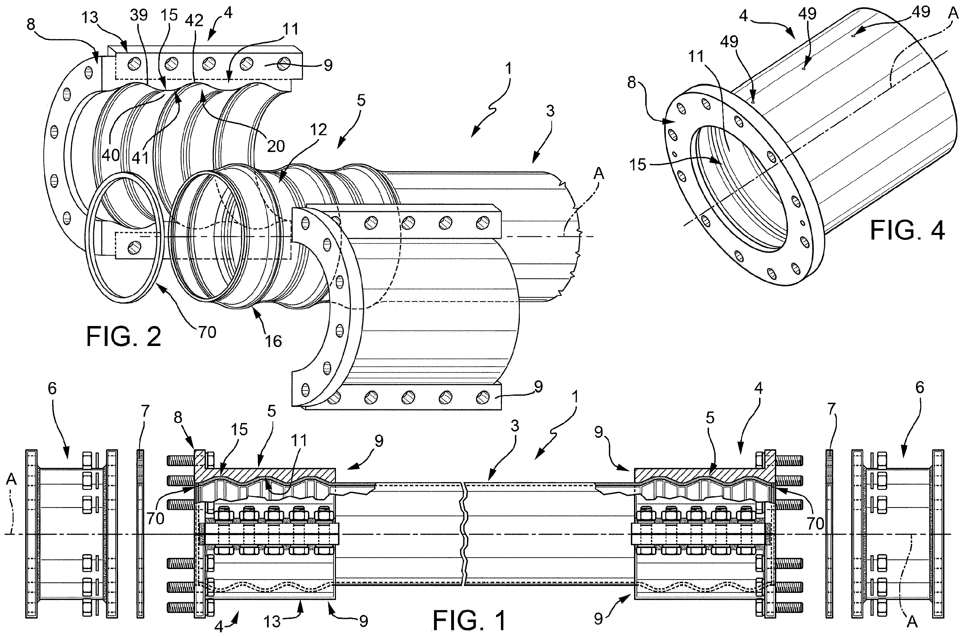

The duct 1 comprises multiple conveyor pipes 3 for conveying fluid connected together in a fluid-tight manner, only one of which is illustrated in Figure 1.

Each pipe 3 extends along its own axis A.

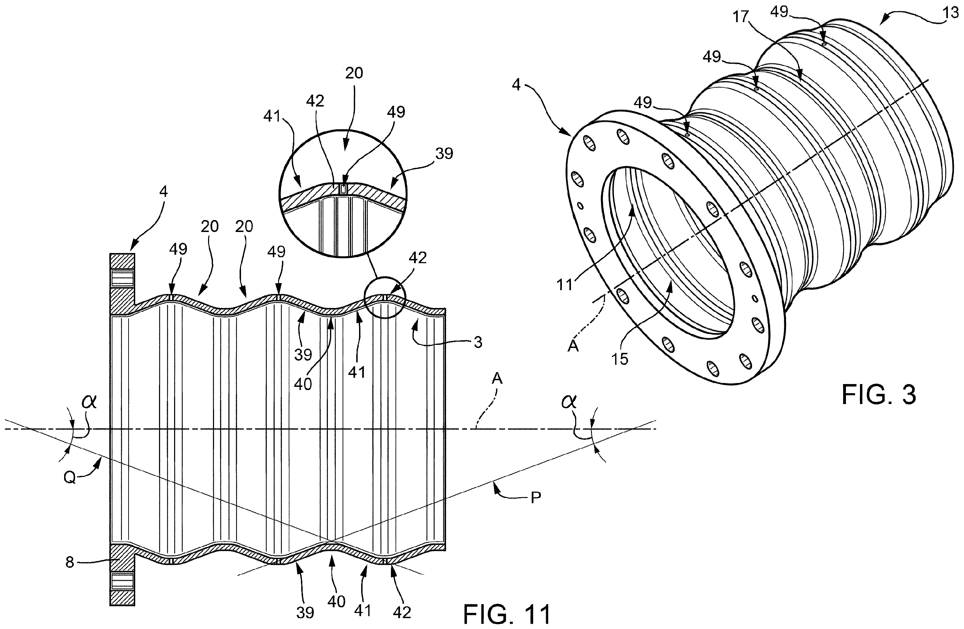

With reference to Figure 3, the duct 2 comprises, in addition, for each pipe 3:
- a pair of flanged elements 4 coaxially and externally fitted to respective opposite axial ends 5 of the pipe 3;
- a pair of connection elements 6 connected to respective flanged elements 4 and, directly or indirectly, to respective pipes 3 not illustrated in Figure 3; and
- a pair of disc-shaped seals 7 axially placed between respective flanged elements 4 and corresponding connection elements 6.

Hereinafter in this description, only one pipe 3 is described and the corresponding flanged elements 4, connection elements 6, and seals 7, since the pipes 3 are identical to each other.

In particular, the duct 2 is fixed in a known way to the ground at multiple anchorage points not illustrated in the attached figures.

The flanged elements 4 also comprise:
- corresponding, radially external surfaces 13; and
- corresponding, radially internal surfaces 11, opposite to the first surfaces 13 and coupled, in contact, with the respective surfaces 12 of the pipe 3.

In the example illustrated in Figures 1 and 2, the surfaces 13 are flat.

The surfaces 12 define respective ends 5 of the pipe 3.

The surfaces 11 and 12 comprise respective corrugations 15, 16 coupled together so as to axially hold the pipe 3 inside the flanged elements 4; the corrugations 15, 16 have greater extensions parallel to the axis A and a thickness radial to the axis A and smaller than the extension along the axis A itself.

The term "corrugation" refers, hereinafter in this description, to a succession that is continuous, or continuous in sections, and periodic of annular ridges and groves around the axis A.

The corrugation has, in one section containing the axis A:
- a longitudinal extension direction along which the ridges and grooves repeat periodically; and
- a transverse direction orthogonal to the extension direction and along which the ridges and grooves extend at a distance from each other.

The corrugations 15, 16 are preferably coupled without the use of adhesive.

The coupling between the corrugations 15, 16 generates an axial reaction on the pipe 3 that counters the dynamic action axially exerted by the fluid in the pipe 3. This action is exerted, for example, by the dynamic conditions or by the static pressure of the fluid.

By way of non-limiting example, this action is generated at curved sections of the pipe 3 or during closure of the valves arranged downstream of the pipe 3 itself with reference to the forward direction of the fluid.

Hereinafter in this description, only one corrugation 15 is described, since the other corrugation 16 is identical to the first corrugation 15.

More specifically, the corrugation 15 comprises multiple repeated modules 20, identical to each other and arranged consecutively parallel to the axis A.

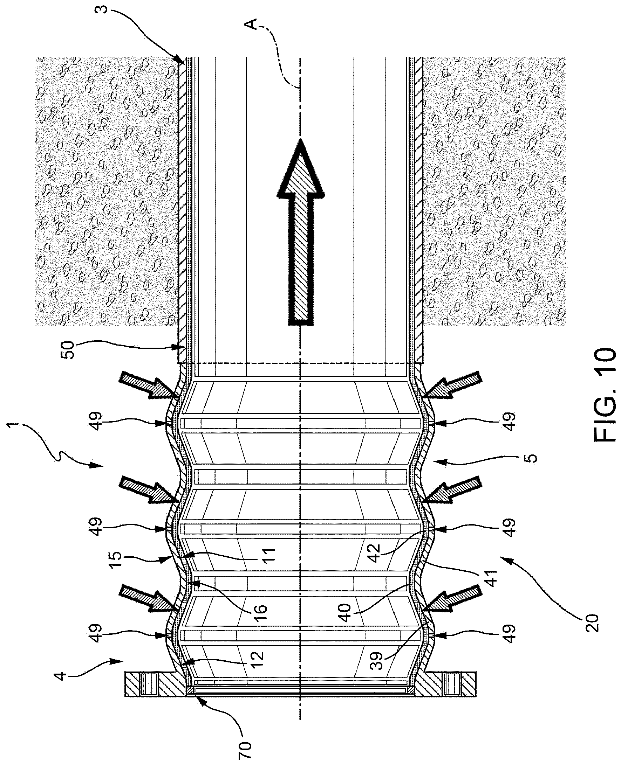

Each module 20 extends coaxially to the axis A and comprises, in particular, proceeding parallel to the axis A in a direction oriented by one of the flanged elements 4 towards the other flanged element 4 (Figures 2, 10, and 11):
- a truncated cone section 39;
- a cylindrical section 40 arranged at a first radial distance from the axis A;
- a truncated cone section 41; and
- a cylindrical section 42 arranged at a second radial distance from the axis A that is greater than the first radial distance.

The section 39 is connected to the section 40 of the corresponding module 20 and to the section 42 of a module 20 adjacent to it via a pair of pipe fittings with the radius r.

The section 41 is connected to the sections 40, 42 via a pair of pipe fittings with the radius r.

In particular, the axial extension of the sections 40, 42 is equal.

The sections 42, 40 respectively define ridges and grooves of the respective corrugations 15, 16.

The extension parallel to the axis A of the sections 39, 41 is equal and greater than the axial extension of the sections 40, 42.

The sections 39, 41 have respective disposition planes P, Q tilted between them at the same acute angle α in relation to the axis A.

The sections 39, 41 are symmetrical in relation to a radial median plane of the section 40 of the same module 20.

The duct 1 comprises, in addition, multiple annular seals 70 of axis A placed axially between respective ends 5 of the pipe 3 and corrugations 15 of corresponding flanged elements 4 so as to prevent fluid from accessing the area between the above-mentioned ends 5 and the respective corrugations 15.

To this end, the corrugations 16 are axially shorter than the corresponding corrugations 15 and end at an axial distance from the above-mentioned corrugations 16 so as to enable the fixing of the corresponding seals 70.

Each connection element 6 is, in the example illustrated, shaped like a tubular body bolted, at corresponding head surfaces 8 of opposite axial ends, to the flanged elements 4 of corresponding pipes 3.

Each seal 7 is axially placed in contact between one corresponding flanged element 4 and a related connection element 5.

Each flanged element 4 comprises, in the example illustrated, a pair of half-bearings 9 bolted to each other (Figure 2).

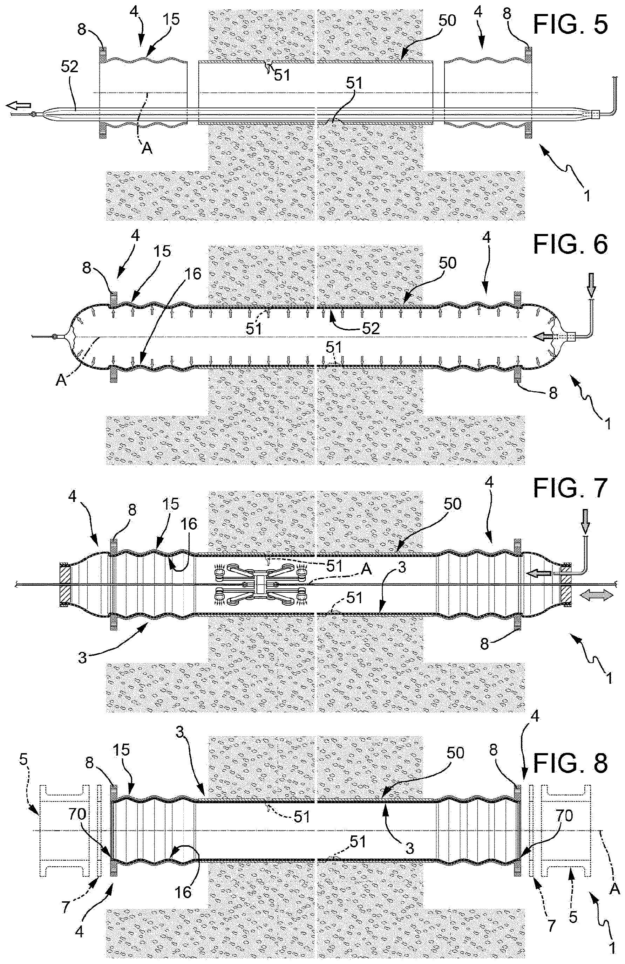

With reference to the embodiment illustrated in Figures 5 to 8, the pipe 3 is housed in a fluid-tight manner inside a host pipe 50 having a broken area 51.

In this way, the pipe 3 implements a technology known as cured-in-place-pipe.

In particular, the pipe 3 is shaped starting from a tubular closed sheath 52 preliminarily imbued with a thermosetting resin (called a carrier) - polyester, vinyl ester, or epoxy resin - suitable for resisting the chemical action of the fluids conveyed in the duct, and, following this, inserted inside the host pipe 50 (Figure 5) .

The sheath 52 is then inflated inside the host pipe 50 so as to make it adhere perfectly to the walls of the host pipe 50 itself (Figure 6).

Once inserted and inflated, the sheath 52 imbued with resin is made to harden through the curing (polymerization) of the resin with which it is imbued, until it forms the pipe 3 adhering to the pipe 50 to be repaired at the area 51 (Figure 7).

When the consolidation is finished, the hardened sheath 52 is cut at the ends 5, or intermediate inspection wells that are not illustrated.

In particular, polymerization of the resin may occur thanks to the administration of heat using hot water or superheated steam or radiant energy via ultraviolet ray emitters.

When the pipe 3 is intended to be inserted in the host pipe 50, the section 42 of each module 20 and the flanged elements 4 comprise respective multiple radial holes 49, which are through holes and angularly spaced equally around the axis A. The holes 49 are designed to enable the escape of the gas that is produced during the hot polymerization of the sheath 52, and normally trapped between the fibres of the sheath 52, or to enable the evacuation of air that, during the step in which the sheath 52 approaches the surface 15, would remain trapped, preventing the correct coupling of the surfaces 15, 16.

In the example illustrated, the pipe 3 is a made of glass fibre or polyester felt.

The flanged element 4 is, in addition, with reference to the example illustrated, produced as a single body made via melting or mechanical sintering techniques (Figure 3).

The assembly and operation of the duct 1 is described below in relation to just one pipe 3.

During the assembly of a new duct 1 or repair of the duct 1 itself, the ends 5 of the pipe 3 are housed in the open half-bearings 9 of the corresponding flanged elements 4. Following this, the half-bearings 9 are closed so as to precisely couple the corrugations 15, 16 and solidly fix the pipe 3 to the corresponding flanged elements 4. The flanged elements 4 with the closed half-bearings 9 bolted together are, at this point, fixed to the ground.

When repairing the host pipe 50, according to the technology known as cured-in-place-pipe, the sheath 52 is housed inside the host pipe 50 at the broken area 51 and the flanged elements 4 are connected to corresponding, opposite axial ends of the host pipe 50 (Figure 5).

The sheath 52 is then inflated inside the host pipe 50 so as to make it adhere perfectly to the walls of the host pipe 50 itself. The radial holes 49 enable the escape of the gas housed inside the sheath 52 that is needed for the inflation thereof (Figure 6).

Once inserted and inflated, the sheath 52 imbued with resin is made to harden through the curing (polymerization) of the resin with which it is imbued, until it forms the pipe 3 adhering to the pipe 50 to be repaired at the area 51.

When the consolidation is finished, the hardened sheath 52 is cut at the ends 5, or intermediate inspection wells that are not illustrated (Figure 7)

Both when laying a new duct 1 and when repairing the damaged duct 1, the movement of the fluid generates an axial thrust on the pipe 3 that would tend to make it slip out of the connection elements 6. In particular, the pressure acting on the components downstream or upstream of the pipe 3 with reference to the direction in which the fluid flows generates a similar axial thrust on the pipe 3 itself. This axial thrust is generated, by way of non-limiting example, at curved sections of the pipe 3 or when the interception elements arranged downstream of the pipe 3 itself are being closed.

This axial thrust is counteracted by the coupling between corrugations 15 and 16, which ensure a stable and correct positioning of the pipe 3 in relation to the connection elements 6.

At the same time, the pressure of the fluid generates a radial thrust on the corrugation 15 that keeps the corrugation 15 firmly in contact with the corrugation 16, increasing the binding action exerted on the pipe by the coupling between the corrugations 15, 16.

The seals 7 ensure the fluid-tight connection between the pipe 3 and the pipes 3 adjacent to it of the duct 1.

The seals 70 ensure the fluid-tight connection between the corrugations 15, 16.

From an examination of the duct 1 and the method according to this invention, the advantages that it enables are clear.

In particular, the coupling between the corrugations 15, 16 generates an axial reaction thrust on the pipe 3 that counters the dynamic action exerted on the pipe 3 itself by the fluid that flows inside of the same pipe 3.

This coupling also counteracts the same axial action that the pressure acting on the components downstream or upstream of the pipe 3, with reference to the direction in which the fluid flows, and rigidly connected to it, may generate on the pipe 3 itself.

It is, thus, possible to ensure the stable and precise positioning of the pipe 3 in relation to the connection elements 6.

Moreover, the binding action of the pipe 3 in relation to the connection elements 6 is increased by the pressure of the fluid flowing inside the pipe 3. This pressure, in fact, generates the radial thrust between the corrugations 15, 16 ensuring its stable contact radial to the axis A.

It is important to highlight how this binding action is obtained without the use of adhesives between the corrugations 15, 16, but simply thanks to the shape coupling between the corrugations 15, 16.

It is, also, important to highlight how the seal between the pipes 3 and the connection elements 6 is obtained thanks to the seals 7, i.e., thanks to the elements separate from the corrugations 15, 16.

Finally, it is clear that the duct 1 and the method described above may be altered, or variations may be produced thereof, without, as a result, departing from the scope of protection of this invention as disclosed in the appended claims.

In particular, the duct 1 may comprise, instead of one or both flanges 4, corresponding interception elements, valves, or hydraulic joints, provided with the surface 11 with the corrugation 15.

Each pipe 3 could, in addition, be produced in subparts assembled using electrowelding.

Each pipe 3 could, in addition, be formed from two half-bearings joined using plates bolted together.

The flanged elements 4 could, in addition, be produced using mechanical processing, moulding, melting, sintering, electrowelding, or cold or hot plastic deformation.

The flanged elements 4 could, in addition, be welded to the connection elements 6.

The surfaces 13 of the flanged elements 4 could, in addition, comprise a corrugation 17 with basically the same shape as the corrugations 15, 16 (Figures 3 and from 5 to 11).

## Claims

1. A duct (1) comprising:
- a pipe (3) for conveying a fluid, extending along an axis (A) and comprising a first portion (12);
- a coupling element (4) fitted to said pipe (3) comprising a second portion (11) fitted to said first portion (12), which can be connected directly or indirectly to another conveyor pipe (3) of said duct (1) ;
said first portion (12) and second portion (11) respectively comprising a first corrugation (15) and a second corrugation (16) coupled together so as to axially hold said pipe (3) to said coupling element (4);
said first and second corrugations (15, 16) having an extension axial and thickness radial to said axis (A); said radial thickness being smaller than said axial extension;
each of said first and second corrugations (15, 16) comprising multiple repeated modules (20), identical to each other and consecutively arranged parallel to said axis (A);
each said module (20) comprising:
- a first section arranged (42) at a first radial distance from said axis (A); and
- a second section arranged (40) at a second radial distance from said axis (A);
said second distance (40) being shorter than said first distance (42);
**characterised in that** it comprises, in addition, a host pipe (50) having a damaged area (51);
said conveyor pipe (3) being fitted coaxially inside said host pipe (50) and cooperating in a fluid-tight manner with the host pipe (50);
said conveyor pipe (3) being inserted, in use, inside said host pipe (50) in the form of an inflatable sheathing (52);
said first section (42) of each module (20) comprising at least one through hole (49) arranged radially to said axis.

2. The duct according to claim 1, **characterised in that** said first and second sections (42, 40) are shaped like cylinders coaxial to said axis (A) and have the same first axial extension as each other.

3. The duct according to claim 2, **characterised in that** it comprises a third section (41) placed between said first and second sections (42, 40) and connected to them;
said third section (41) having a truncated cone shape coaxial to said axis (A).

4. The duct according to claim 3, **characterised in that** it comprises a fourth section (39) arranged on the side axially opposite to said third section (41) in relation to said second section (42);
said fourth section (39) having a truncated cone shape coaxial to said axis (A).

5. The duct according to claim 4, **characterised in that** said fourth and third sections (39, 41) are connected to said second section (40) with a first radius (r);
said third section (39) being connected to said first and second sections (42, 40) with a second radius (r) equal to said first radius (r).

6. The duct according to claim 4, **characterised in that** said third and fourth sections (41, 39) have respective disposition planes (P, Q), tilted in relation to said axis at corresponding, equal acute angles (α).

7. The duct according to any of claims 4 to 6, **characterised in that** said third and fourth sections (41, 39) are symmetrical in relation to a median plane of said second section (40) and having a disposition radial to said axis (A).

8. The duct according to any of the previous claims, **characterised in that** said first and said corrugations (15, 16) are coupled together without the use of adhesive.

9. The duct according to any of the previous claims, **characterised in that** it comprises a seal (70) separate from said first and second portions (11, 12) and placed in a fluid-tight manner between said first and second corrugations (15, 16).

10. A method for producing a duct (1) according to any of the claims 1 to 9, comprising the steps of:
i) fitting a first portion (11) of a coupling element (4) on a second portion (12) of a conveyor pipe (3); and
ii) connecting said coupling element (4) directly or indirectly to an additional conveyor pipe (3) of said duct (1);
iii) of coupling together a first corrugation (15) borne by said first portion (11) and a second corrugation (16) borne by said second portion (12), so as to axially hold said conveyor pipe (3) to said duct (1) ;
said first and second corrugations (15, 16) having an extension axial and thickness radial to said axis (A); said radial thickness being smaller than said axial extension;
each of said first and second corrugations (15, 16) comprising multiple repeated modules (20), identical to each other and consecutively arranged parallel to said axis (A);
each said module (20) comprising:
- a first section (42) arranged at a first radial distance from said axis (A); and
- a second section (40) arranged at a second radial distance from said axis (A);
said second distance being shorter than said first distance;
**characterised in that** it comprises the steps of:
iv) inserting a sheath (52) inside a host pipe (50) to be repaired and having a damaged area (51);
v) inflating said sheath (52) so as to form said conveyor pipe (3); and
vi) arranging said conveyor pipe (3) in contact and in a fluid-tight manner with said host pipe (50);
said conveyor pipe (3) being fitted coaxially inside said host pipe (50) and cooperating in a fluid-tight manner with the host pipe (50);
said conveyor pipe (3) being inserted inside said host pipe (50) in the form of said sheath (52);
said first section (42) of each module (20) comprising at least one through hole (49) arranged radially to said axis.

11. The method according to claim 10, **characterised in that** said step iii) occurs without the use of adhesive.

## Patentansprüche

1. Eine Leitung (1), aufweisend:
- ein Rohr (3) zum Befördern eines Fluids, das sich entlang einer Achse (A) erstreckt und einen ersten Abschnitt (12) aufweist;
- ein Kupplungselement (4), das an dem Rohr (3) angebracht ist und einen zweiten Abschnitt (11) aufweist, der an dem ersten Abschnitt (12) angebracht ist, welcher direkt oder indirekt mit einem anderen Förder-Rohr (3) der Leitung (1) verbunden werden kann;
wobei der erste Abschnitt (12) und der zweite Abschnitt (11) jeweils eine erste Riffelung (15) und eine zweite Riffelung (16) aufweisen, die miteinander gekoppelt sind, um das Rohr (3) axial an dem Kupplungselement (4) zu halten;
wobei die erste und die zweite Riffelung (15, 16) eine axiale Erstreckung und eine radiale Dicke zu der Achse (A) aufweisen; wobei die radiale Dicke kleiner ist als die axiale Erstreckung;
jede der ersten und zweiten Riffelungen (15, 16) mehrere wiederholte Module (20) aufweist, die identisch zueinander und aufeinanderfolgend parallel zu der Achse (A) angeordnet sind;
wobei jedes Modul (20) aufweist:
- einen ersten Abschnitt (42), der in einem ersten radialen Abstand von der Achse (A) angeordnet ist; und
- einen zweiten Abschnitt (40), der in einem zweiten radialen Abstand von der Achse (A) angeordnet ist
wobei der zweite Abstand (40) kürzer ist als der erste Abstand (42)
**dadurch gekennzeichnet, dass** es zusätzlich ein Trägerrohr (50) mit einem beschädigten Bereich (51) aufweist; wobei das Förder-Rohr (3) koaxial in das Trägerrohr (50) eingepasst ist und auf fluiddichte Weise mit dem Trägerrohr (50) zusammenwirkt; wobei das Förder-Rohr (3) im Einsatz in das Trägerrohr (50) in Form einer aufblasbaren Hülle (52) eingesetzt wird;
wobei der erste Abschnitt (42) jedes Moduls (20) mindestens ein Durchgangsloch (49) aufweist, das radial zur Achse angeordnet ist.

2. Die Leitung gemäß Anspruch 1, **dadurch gekennzeichnet, dass** die ersten und zweiten Abschnitte (42, 40) wie Zylinder geformt sind, die koaxial zu der Achse (A) sind und die gleiche erste axiale Erstreckung aufweisen.

3. Die Leitung gemäß Anspruch 2, **dadurch gekennzeichnet, dass** sie einen dritten Abschnitt (41) aufweist, der zwischen den ersten und zweiten Abschnitten (42, 40) angeordnet und mit diesen verbunden ist;
wobei der dritte Abschnitt (41) eine Kegelstumpfform aufweist, die koaxial zu der Achse (A) ist.

4. Die Leitung gemäß Anspruch 3, **dadurch gekennzeichnet, dass** sie einen vierten Abschnitt (39) aufweist, der auf der Seite angeordnet ist, die dem dritten Abschnitt (41) in Bezug auf den zweiten Abschnitt (42) axial gegenüberliegt;
wobei der vierte Abschnitt (39) eine Kegelstumpfform aufweist, die koaxial zu der Achse (A) ist.

5. Die Leitung gemäß Anspruch 4, **dadurch gekennzeichnet, dass** der vierte und der dritte Abschnitt (39, 41) mit dem zweiten Abschnitt (40) mit einem ersten Radius (r) verbunden sind;
der dritte Abschnitt (39) mit dem ersten und dem zweiten Abschnitt (42, 40) mit einem zweiten Radius (r) verbunden ist, der gleich dem ersten Radius ist

6. Die Leitung gemäß Anspruch 4, **dadurch gekennzeichnet, dass** der dritte und vierte Abschnitt (41, 39) jeweilige Dispositionsebenen (P, Q) aufweisen, die in Bezug auf die Achse in entsprechenden, gleichen spitzen Winkeln (α) angewinkelt sind.

7. Die Leitung gemäß einem der Ansprüche 4 bis 6, **dadurch gekennzeichnet, dass** der dritte und vierte Abschnitt (41, 39) in Bezug auf eine Mittelebene des zweiten Abschnitts (40) symmetrisch sind und eine Disposition radial zu der Achse (A) aufweisen.

8. Die Leitung gemäß einem der vorhergehenden Ansprüche, **dadurch gekennzeichnet, dass** die erste und die zweite Riffelung (15, 16) ohne Verwendung von Klebstoff miteinander verbunden sind.

9. Die Leitung gemäß einem der vorhergehenden Ansprüche, **dadurch gekennzeichnet, dass** sie eine Dichtung (70) aufweist, die von dem ersten und zweiten Abschnitt (11, 12) getrennt ist und in einer fluiddichten Weise zwischen der ersten und zweiten Riffelung (15, 16) angeordnet ist.

10. Ein Verfahren zur Herstellung einer Leitung (1) aus einem der Ansprüche 1 bis 9, aufweisend die Schritte:
i) Anbringen eines ersten Abschnitts (11) eines Kupplungselements (4) an einem zweiten Abschnitt (12) eines Förder-Rohrs (3); und
ii) Verbinden des Kupplungselements (4) direkt oder indirekt mit einem zusätzlichen Förder-Rohr (3) der Leitung (1);
iii) Zusammenkoppeln einer ersten Riffelung (15), die von dem ersten Abschnitt (11) getragen wird, und einer zweiten Riffelung (16), die von dem zweiten Abschnitt (12) getragen wird, um das Förder-Rohr (3) axial an der Leitung (1) zu halten;
wobei die erste und zweite Riffelung (15, 16) eine axiale Erstreckung und eine radiale Dicke zu der Achse (A) aufweisen; wobei die radiale Dicke kleiner ist als die axiale Erstreckung;
wobei jede der ersten und zweiten Riffelungen (15, 16) mehrere wiederholte Module (20) aufweist, die identisch zueinander und aufeinanderfolgend parallel zu der Achse (A) angeordnet sind;
wobei jedes Modul (20) aufweist:
- einen ersten Abschnitt (42), der in einem ersten radialen Abstand von der Achse (A) angeordnet ist; und
- einen zweiten Abschnitt (40), der in einem zweiten radialen Abstand von der Achse (A) angeordnet ist;
wobei der zweite Abstand kleiner als der erste Abstand ist; **dadurch gekennzeichnet, dass** es die folgenden Schritte aufweist:
iv) Einführen einer Hülle (52) in ein zu reparierendes Trägerrohr (50), das einen beschädigten Bereich (51) aufweist;
v) Aufblasen der Hülle (52), um das Förder-Rohr (3) auszubilden; und
vi) Anordnen des Förder-Rohrs (3) in Kontakt und in einer fluiddichten Weise an dem Aufnahmerohr (50); wobei das Förder-Rohr (3) koaxial in das Trägerrohr (50) eingepasst ist und in einer fluiddichten Weise mit dem Trägerrohr (50) zusammenwirkt;
das Förder-Rohr (3) in Form der Hülle (52) in das Trägerrohr (50) eingeführt wird;
der erste Abschnitt (42) jedes Moduls (20) mindestens ein Durchgangsloch (49) aufweist, das radial zur Achse angeordnet ist.

11. Das Verfahren nach Anspruch 10, **dadurch gekennzeichnet, dass** der Schritt iii) ohne Verwendung von Klebstoff erfolgt.

## Revendications

1. Conduit (1) comprenant :
- un tuyau (3) pour transporter un fluide, s'étendant le long d'un axe (A) et comprenant une première partie (12) ;
- un élément d'accouplement (4) monté sur ledit tuyau (3) comprenant une seconde partie (11) montée sur ladite première partie (12), qui peut être reliée directement ou indirectement à un autre tuyau transporteur (3) dudit conduit (1) ;
ladite première partie (12) et ladite seconde partie (11) comprenant respectivement une première cannelure (15) et une seconde cannelure (16) accouplées ensemble de manière à maintenir axialement ledit tuyau (3) audit élément d'accouplement (4) ;
lesdites première et seconde cannelures (15, 16) ayant une extension axiale et une épaisseur radiale par rapport audit axe (A) ; ladite épaisseur radiale étant inférieure à ladite extension axiale ;
chacune desdites première et seconde cannelures (15, 16) comprenant plusieurs modules répétés (20), identiques les uns aux autres et disposés consécutivement parallèlement audit axe (A) ;
chaque dit module (20) comprenant :
- une première section (42) disposée à une première distance radiale dudit axe (A) ; et
- une deuxième section (40) disposée à une seconde distance radiale dudit axe (A) ;
ladite seconde distance (40) étant plus courte que ladite première distance (42) ;
**caractérisé en ce qu'**il comprend, en outre, un tuyau hôte (50) ayant une zone endommagée (51) ;
ledit tuyau transporteur (3) étant monté coaxialement à l'intérieur dudit tuyau hôte (50) et coopérant de manière étanche avec le tuyau hôte (50) ;
ledit tuyau transporteur (3) étant inséré, en cours d'utilisation, à l'intérieur dudit tuyau hôte (50) sous la forme d'un gainage gonflable (52) ;
ladite première section (42) de chaque module (20) comprenant au moins un trou traversant (49) disposé radialement par rapport audit axe.

2. Conduit selon la revendication 1, **caractérisé en ce que** lesdites première et deuxième sections (42, 40) ont une forme similaire à des cylindres coaxiaux par rapport audit axe (A) et ont la même première extension axiale l'une par rapport à l'autre.

3. Conduit selon la revendication 2, **caractérisé en ce qu'**il comprend une troisième section (41) placée entre lesdites première et deuxième sections (42, 40) et reliée à celles-ci ;
ladite troisième section (41) ayant une forme tronconique coaxiale par rapport audit axe (A).

4. Conduit selon la revendication 3, **caractérisé en ce qu'**il comprend une quatrième section (39) disposée sur le côté axialement opposé à ladite troisième section (41) par rapport à ladite deuxième section (42) ;
ladite quatrième section (39) ayant une forme tronconique coaxiale par rapport audit axe (A).

5. Conduit selon la revendication 4, **caractérisé en ce que** lesdites quatrième et troisième sections (39, 41) sont reliées à ladite deuxième section (40) par un premier rayon (r) ;
ladite troisième section (39) étant reliée auxdites première et deuxième sections (42, 40) par un second rayon (r) égal audit premier rayon (r).

6. Conduit selon la revendication 4, **caractérisé en ce que** lesdites troisième et quatrième sections (41, 39) ont des plans de disposition respectifs (P, Q), inclinés par rapport audit axe selon des angles aigus correspondants et égaux (α).

7. Conduit selon l'une quelconque des revendications 4 à 6,
**caractérisé en ce que** lesdites troisième et quatrième sections (41, 39) sont symétriques par rapport à un plan médian de ladite deuxième section (40) et ayant une disposition radiale par rapport audit axe (A).

8. Conduit selon l'une quelconque des revendications précédentes,
**caractérisé en ce que** lesdites première et seconde cannelures (15, 16) sont accouplées ensemble sans l'utilisation d'adhésif.

9. Conduit selon l'une quelconque des revendications précédentes,
**caractérisé en ce qu'**il comprend un joint d'étanchéité (70) séparé desdites première et seconde parties (11, 12) et placé de manière étanche entre lesdites première et seconde cannelures (15, 16).

10. Procédé de fabrication d'un conduit (1) selon l'une quelconque des revendications 1 à 9, comprenant les étapes consistant à :
i) monter une première partie (11) d'un élément d'accouplement (4) sur une seconde partie (12) d'un tuyau transporteur (3) ; et
ii) relier ledit élément d'accouplement (4) directement ou indirectement à un tuyau transporteur (3) supplémentaire dudit conduit (1) ;
iii) accoupler ensemble une première cannelure (15) portée par ladite première partie (11) et une seconde cannelure (16) portée par ladite seconde partie (12), de manière à maintenir axialement ledit tuyau transporteur (3) audit conduit (1) ;
lesdites première et seconde cannelures (15, 16) ayant une extension axiale et une épaisseur radiale par rapport audit axe (A) ;
ladite épaisseur radiale étant inférieure à ladite extension axiale ;
chacune desdites première et seconde cannelures (15, 16) comprenant plusieurs modules répétés (20), identiques les uns aux autres et disposés consécutivement parallèlement audit
axe (A) ;
chaque dit module (20) comprenant :
- une première section (42) disposée à une première distance radiale dudit axe (A) ; et
- une deuxième section (40) disposée à une seconde distance radiale dudit axe (A) ;
ladite seconde distance étant plus courte que ladite première distance ;
**caractérisé en ce qu'**il comprend les étapes consistant à :
iv) insérer une gaine (52) à l'intérieur d'un tuyau hôte (50) à réparer et ayant une zone endommagée (51) ;
v) gonfler ladite gaine (52) de manière à former ledit tuyau transporteur (3) ; et
vi) disposer ledit tuyau transporteur (3) en contact et de manière étanche avec ledit tuyau hôte (50) ;
ledit tuyau transporteur (3) étant monté coaxialement à l'intérieur dudit tuyau hôte (50) et coopérant de manière étanche avec le tuyau hôte (50) ;
ledit tuyau transporteur (3) étant inséré à l'intérieur dudit tuyau hôte (50) sous la forme de ladite gaine (52) ;
ladite première section (42) de chaque module (20) comprenant au moins un trou traversant (49) disposé radialement par rapport audit axe.

11. Procédé selon la revendication 10, **caractérisé en ce que** ladite étape iii) se déroule sans l'utilisation d'adhésif.
